# FASCICULE DE BREVET EUROPEEN

(11) **EP 3 222 707 B1**
(45) Date de publication et mention de la délivrance du brevet: **26.12.2018**
(21) Numéro de dépôt: 17162776.3
(22) Date de dépôt: 24.03.2017
(51) Int. Cl.: C12H 1/056, C12H 1/07

(54) **PROCÉDÉ DE CLARIFICATION, D'AMÉLIORATION DE LA FILTRABILITÉ ET DE STABILISATION D'UN MILIEU LIQUIDE ALIMENTAIRE**
KLÄRUNGSVERFAHREN ZUR VERBESSERUNG DER FILTRIERBARKEIT UND ZUR STABILISIERUNG EINES FLÜSSIGEN NAHRUNGSMITTELMILIEUS
METHOD FOR CLARIFYING, IMPROVING FILTERABILITY AND STABILISING A FOOD LIQUID MEDIUM

(30) Priorité: 25.03.2016 FR 1652616
(43) Date de publication de la demande: 27.09.2017
(73) Titulaire: Biolaffort, 33100 Bordeaux (FR); Bucher Vaslin, 49290 Chalonnes sur Loire (FR)
(72) Inventeur: DOBROWOLSKI, Eric, 49380 CHAVAGNES LES EAUX (FR); NOILET, Pascal, 49000 ANGERS (FR); ITURMENDI, Nerea, 31007 Pamplona (ES); MOINE, Virginie, 33210 BOMMES (FR)
(74) Mandataire: Ipside

(56) Documents cités:
- EP-A1- 0 351 363
- EP-A1- 0 962 522
- EP-A1- 2 191 731
- WO-A2-2006/032088
- GB-A- 2 314 564
- US-A- 4 975 297

## Description

La présente invention s'inscrit dans le domaine du traitement des milieux liquides alimentaires, en particulier des milieux contenant des particules solides en suspension, notamment des vins, en vue de leur clarification, de l'amélioration de leur filtrabilité et de leur stabilisation. Plus particulièrement, l'invention concerne un procédé de clarification, d'amélioration de la filtrabilité et de stabilisation d'un milieu liquide alimentaire, du type mettant en oeuvre la technique de filtration tangentielle. Elle concerne également l'utilisation de patatine de pomme de terre pour la clarification, l'amélioration de la filtrabilité et la stabilisation d'un milieu liquide alimentaire.

L'invention trouve plus particulièrement application pour la clarification, l'amélioration de la filtrabilité et la stabilisation des vins, en particulier des vins rouges. Un tel domaine d'application, qui sera plus particulièrement décrit dans la présente description, n'est cependant nullement limitatif de l'invention, qui s'applique également à tous milieux liquides alimentaires susceptibles de contenir des matières solides en suspension et/ou des solutés à éliminer, notamment aux jus de fruits et aux boissons issues de la fermentation alcoolique autres que le vin, telles que la bière ou le cidre, ainsi qu'aux moûts, baumes, etc.

Les vins peuvent contenir des matières solides en suspension et des particules colloïdales, qui les troublent. La clarification consiste à en éliminer les causes de turbidité physico-chimiques et biologiques, telles que les lies et autres matières en suspension.

En particulier, il a été proposé par l'art antérieur d'éliminer par filtration les matières solides présentes en suspension dans les vins et autres milieux liquides alimentaires, notamment par la technique de filtration tangentielle.

Outre des matières solides de taille suffisamment importante pour pouvoir être éliminées directement par filtration, les vins contiennent également des composés solubles qui, dans le temps, peuvent devenir instables et générer un trouble, tels que des tannins et des protéines. Afin de permettre l'élimination de telles matières et de tels composés, de sorte à mieux clarifier et à stabiliser les vins traités, il est couramment mis en oeuvre selon l'art antérieur des procédés dits de collage, consistant à incorporer dans le vin plus ou moins trouble et plus ou moins instable une substance, appelée agent de collage, capable de réagir avec des composés instables et/ou réactifs, et de floculer et sédimenter en entrainant les particules fines en suspension dans le vin et/ou les composés solubles instables. Le collage permet ainsi d'améliorer la limpidité du vin, d'augmenter sa filtrabilité et de sa stabilité et d'améliorer ses caractéristiques organoleptiques, en particulier sa couleur, brillance, souplesse en bouche.

Il existe plusieurs types d'agents de collage. On peut citer en particulier les agents de collage minéraux, tels que la bentonite, et les agents de collage protéiques, notamment d'origine végétale ou animale, tels que l'albumine d'oeuf, la gélatine, la colle de pois, etc.

Le collage des vins est généralement suivi d'une phase d'homogénéisation, puis de décantation, avant l'opération de filtration.

Le document EP 0 962 522 décrit par exemple un procédé de collage de boissons au moyen de protéines végétales comportant de telles étapes, c'est-à-dire mis en oeuvre en conditions statiques. Le document WO 2006/032088 ou encore le document GB 2 314 564 en décrivent d'autres exemples, mettant en oeuvre, en tant qu'agent de collage, non pas un agent protéique, mais une pectine, c'est-à-dire un polysaccharide, naturelle ou modifiée de manière enzymatique.

Selon l'art antérieur, le collage au moyen des agents de collage de type protéique est en particulier toujours réalisé en statique. L'agent de collage, également nommé colle protéique, est ajouté au vin, puis le vin est homogénéisé par pompage. La création du floc est généralement rapide, mais selon sa taille, la taille et la forme de la cuve dans laquelle le collage est mis en oeuvre, les conditions atmosphériques et la température du vin, le temps de décantation peut atteindre plusieurs semaines. Ceci implique une immobilisation du vin et la présence de moyens de stockage adaptés. Le volume des lies formées est en outre variable, et dépend des conditions de la décantation et de la taille du floc. Les procédés de clarification et stabilisation des vins par collage protéique s'avèrent ainsi peu satisfaisants en de nombreux aspects.

La filtration des vins contenant des produits obtenus par collage est en outre souvent problématique. Ces produits sont en effet généralement colmatants, en particulier lorsque leur concentration dans le vin à filtrer n'est pas maîtrisée. Ils peuvent alors colmater la membrane de filtration et/ou boucher les capillaires d'un module de filtration.

En alternative au collage statique, il a été proposé par l'art antérieur des solutions dites de collage en ligne, mettant en oeuvre des techniques séparatives telles que la filtration tangentielle, la centrifugation et la flottation, et selon lesquelles l'agent de collage est introduit en continu et en conditions dynamiques dans le milieu liquide à traiter circulant en direction des moyens d'élimination des matières solides.

Un exemple d'un tel procédé, permettant la stabilisation et la clarification simultanée d'un milieu liquide, par filtration tangentielle dudit milieu liquide en présence d'un agent stabilisant granulaire, le polyvinylpolypyrrolidone (PVPP), ou encore de gel de silice, de diatomite ou de bentonite, est notamment décrit dans les documents US 5,262,053 et EP 0 351 363, ou encore dans le document US 4,975,297. Un autre procédé connu de l'art antérieur consiste à ajouter, par dosage en continu, une quantité de bentonite durant la filtration d'un vin.

Ces procédés, mettant en oeuvre ces agents de collage particuliers, permettent de clarifier et de retenir les protéines instables, notamment des vins blancs et rosés. Ils ne permettent cependant pas de stabiliser de manière satisfaisante les matières colorantes contenues dans les vins rouges, en particulier les composés polyphénoliques responsables de leur coloration et de leur structure, contrairement aux procédés de collage statique mettant en oeuvre des agents de collage de type protéique.

A l'origine de la présente invention, il a été découvert par les présents inventeurs que, alors que les agents de collage protéiques couramment mis en oeuvre pour le collage des vins génèrent des flocs très colmatants, et/ou présentent une faible réactivité vis-à-vis des composés polyphénoliques contenus dans les vins rouges, les rendant inaptes à une utilisation dans des procédés de collage en ligne par filtration tangentielle, de manière tout à fait inattendue, un agent de collage particulier, contenant une protéine d'origine végétale spécifique, s'avère à la fois suffisamment réactif vis-à-vis des composés à fixer, notamment vis-à-vis des composés polyphénoliques présents dans les vins rouges, et générateur de flocs suffisamment peu colmatants, pour pouvoir être mis en oeuvre dans le cadre d'un procédé de collage en ligne, dans lequel cet agent de collage est ajouté en continu au vin à traiter lors de la filtration tangentielle de ce dernier. Cet agent de collage rend ainsi possible la clarification, l'amélioration de la filtrabilité et la stabilisation des vins, y compris des vins rouges, en une seule étape, et qui plus est avec des performances de clarification / amélioration de la filtrabilité / stabilisation (de matière colorante et tartrique), et de vitesse et rendement, élevées.

La présente invention vise ainsi à remédier aux inconvénients des procédés de clarification et de stabilisation des vins proposés par l'art antérieur, notamment à ceux exposés ci-avant, en proposant un tel procédé qui permette, avec de hauts rendements et en une seule étape, de clarifier, d'améliorer la filtrabilité et de stabiliser tous milieux liquides alimentaires contenant des matières solides en suspension, y compris les vins rouges nécessitant une stabilisation de leurs matières colorantes.

Des objectifs supplémentaires de l'invention sont que ce procédé soit simple à réaliser, et qui plus est au moyen de matériels couramment disponibles dans les lieux de fabrication des vins, de sorte à être peu onéreux à mettre en oeuvre.

A cet effet, il est proposé selon la présente invention un procédé dit de collage en ligne, combinant la technique de filtration tangentielle avec la mise en oeuvre d'un agent de collage particulier, qui permet avantageusement, simultanément, de clarifier, d'améliorer la filtrabilité et de stabiliser les milieux liquides alimentaires, notamment, mais non limitativement, les vins.

Ainsi, selon un premier aspect, il est proposé par la présente invention un procédé de clarification, d'amélioration de la filtrabilité et de stabilisation, notamment de stabilisation des matières colorantes, d'un milieu liquide alimentaire contenant des particules solides en suspension. Ce procédé comprend :
- l'entraînement du milieu liquide alimentaire en circulation dans un dispositif de filtration tangentielle comportant, de manière classique en elle-même, un conduit d'alimentation en milieu liquide, une membrane de filtration tangentielle et une boucle de recirculation de rétentat,
- et la filtration tangentielle du milieu liquide alimentaire, de manière à obtenir un rétentat de filtration et un perméat de filtration, le rétentat de filtration étant entraîné en circulation dans la boucle de recirculation.

Le procédé selon l'invention comprend en outre l'introduction, préférentiellement en continu et de manière contrôlée, dans le milieu liquide alimentaire situé dans le dispositif de filtration tangentielle, avant la filtration dudit milieu liquide alimentaire, notamment en amont de la membrane de filtration dans le sens de circulation du milieu liquide dans le dispositif, d'un agent de collage contenant de la patatine de pomme de terre.

Le perméat de filtration obtenu à l'issue de la filtration tangentielle correspond alors au milieu liquide alimentaire qui est avantageusement clarifié et stabilisé.

Comme exposé ci-avant, alors que l'homme du métier aurait été détourné de la mise en oeuvre combinée d'un agent de collage protéique et de la technique de filtration tangentielle, car sachant très bien, de par ses connaissances générales dans le domaine, que :
- d'une part, les vitesses de sédimentation lors du collage au moyen d'agents de collage protéiques sont lentes,
- et d'autre part, les protéines sont connues de manière générale, dans le domaine de la filtration, notamment de la microfiltration et de l'ultrafiltration, pour être particulièrement colmatantes, comme en témoignent par exemple la publication de Bowen et al., 1991, dans Biotechnology and Bioengineering, 38:688-696, ou encore la revue de Marshall et al., 1993, dans Desalination, 91:65-108,
il a été découvert par les présents inventeurs que, de manière particulièrement surprenante, un agent de collage de type protéique particulier, plus précisément contenant de la patatine de pomme de terre, s'avère à la fois suffisamment réactif pour assurer un collage efficace en étant mis en oeuvre dans un procédé de collage en ligne, et qui plus est sans que les flocs qu'il permet de former dans le milieu traité ne soient colmatants pour la membrane de filtration utilisée. Rien dans l'art antérieur, qui ne décrit rien d'autre que soit un procédé de collage mettant en oeuvre un agent de collage protéique en conditions statiques, soit un procédé de collage en ligne mettant en oeuvre des stabilisants minéraux, ne laissait présager un tel résultat particulièrement avantageux.

L'introduction de l'agent de collage selon l'invention, contenant de la patatine de pomme de terre, peut être réalisée dans le milieu liquide alimentaire situé en conditions statiques dans le dispositif de filtration, par exemple dans une cuve ou cuvon de travail dudit dispositif de filtration, depuis laquelle/lequel le milieu alimentaire est conduit vers la membrane de filtration tangentielle.

Préférentiellement, l'introduction de l'agent de collage selon l'invention, contenant de la patatine de pomme de terre, est réalisée dans le milieu liquide alimentaire qui est entrainé en circulation dans le dispositif de filtration tangentielle, en amont de la membrane de filtration tangentielle, par exemple dans le conduit d'alimentation du dispositif de filtration tangentielle, amenant le milieu liquide alimentaire de la cuve de travail du dispositif, vers la membrane de filtration, ou encore dans la boucle de recirculation de rétentat.

Comme explicité ci-avant, on entend selon la présente invention, par agent de collage, une substance apte à réagir avec des composés contenus dans un milieu liquide, pour provoquer leur précipitation / floculation.

On entend par ailleurs, par pomme de terre, de manière classique en elle-même, le tubercule produit par l'espèce végétale *Solanum tuberosum.*

La patatine est une glycoprotéine acide qui constitue jusqu'à 40 à 50 % en poids des protéines solubles de la pomme de terre, dont la séquence protéique a été décrite dans la littérature (patatine de *Solanum tuberosum*, N° d'accession Genbank : CAA81735.1).

Cette protéine est utilisée par l'art antérieur en tant qu'agent de collage protéique, dans les procédés de collage statique, notamment pour l'élimination des composés polyphénoliques dans les vins rouges. Elle est en particulier connue pour sa capacité à réagir très vite avec ces composés (A. Gambuti et al., 2012, Eur. Food Res. Technol. 235: 753-765).

De manière très surprenante, alors que la patatine en elle-même s'avère très colmatante pour les types de membranes couramment mis en oeuvre dans les techniques de filtration tangentielle, les flocs générés par cette protéine ne sont que très peu colmatants vis-à-vis de telles membranes, par exemple vis-à-vis des membranes de polyéthersulfone, en particulier de seuil de coupure aussi bas que 0,2 µm.

Le procédé selon l'invention tire ainsi avantageusement profit des deux propriétés combinées que sont la forte réactivité de l'agent de collage contenant de la patatine de pomme de terre, et le caractère peu colmatant des flocs qu'il génère. A titre de comparaison, aucun des autres agents de collage protéiques de l'art antérieur ne présente une telle combinaison de propriétés avantageuses. Par exemple, la gélatine, très réactive, génère des flocs beaucoup plus colmatants, alors que la colle de pois, dont les flocs sont peu colmatants, n'est quant à elle pas suffisamment réactive pour permettre sa mise en oeuvre de manière satisfaisante dans un procédé de collage en ligne.

En outre, la combinaison de la technique de filtration tangentielle avec l'agent de collage selon l'invention, contenant de la patatine de pomme de terre, s'avère avantageuse en ce qu'elle permet de remédier à un inconvénient de cet agent de collage lors de sa mise en oeuvre dans les procédés de collage statique de l'art antérieur. En effet, la patatine de pomme de terre génère des flocs de taille importante, qui sédimentent vite et génèrent un volume de lies important. Le collage en ligne, selon lequel le milieu liquide alimentaire additionné de l'agent de collage est constamment entrainé en mouvement dans le dispositif de filtration, permet de limiter fortement les phénomènes de sédimentation, et donc le volume de lies et les pertes lors de la mise en oeuvre du procédé. Par rapport aux procédés de collage statique, le procédé selon l'invention présente en outre les avantages d'un temps de mise en oeuvre considérablement réduit, et de ne nécessiter aucun volume important de stockage du milieu liquide en décantation.

Les étapes du procédé relevant de la filtration tangentielle sont mises en oeuvre de manière classique en elle-même, au moyen de matériel également classique pour ce type d'opérations. Le liquide à traiter est mis en circulation en boucle, de sorte à passer au contact de la membrane de filtration de façon tangentielle. Sous l'effet d'un gradient de pression, une partie du liquide, nommée le perméat, traverse la membrane, tandis que les particules retenues par la membrane se concentrent dans le liquide n'ayant pas traversé la membrane, nommé rétentat. Une contrainte de cisaillement, créée par la circulation tangentielle du fluide, s'oppose au dépôt des particules en surface de la membrane. La résistance à l'écoulement et le colmatage des membranes sont ainsi minimes par rapport à la filtration frontale.

Selon l'invention, la filtration peut consister aussi bien en une microfiltration qu'en une ultrafiltration. La microfiltration tangentielle permet en particulier avantageusement de filtrer, en une seule opération, et avec un seuil de coupure très bas, des liquides relativement chargés en impuretés solides.

Selon l'invention, l'agent de collage est dosé en continu dans le milieu liquide alimentaire, celui-ci étant de préférence en circulation dans le dispositif de filtration tangentielle, soit dans le conduit d'alimentation entraînant ce liquide depuis un réservoir de stockage, ou cuve de travail, vers la membrane de filtration tangentielle, soit dans la boucle de recirculation de rétentat, en amont de la membrane dans le sens de circulation du milieu liquide, soit dans un conduit de circulation, ou dans tout autre élément, disposé sur le parcours du milieu liquide entre ce conduit d'alimentation et la boucle de recirculation.

Le procédé selon l'invention permet avantageusement, en une seule étape, par des opérations simples, et avec une performance de filtration élevée, de réaliser la stabilisation colloïdale du milieu liquide alimentaire traité, y compris la stabilisation des matières colorantes des vins rouges. Par rapport aux techniques proposées par l'art antérieur procédant par collage statique, il apporte un gain de temps considérable et diminue le nombre d'opérations manuelles nécessaires à l'obtention d'une performance équivalente. Après utilisation, la membrane de filtration peut en outre être facilement régénérée. Les volumes de lies après filtration peuvent par ailleurs être faibles, inférieurs à 1 % en volume par rapport au volume total de rétentat.

Par ailleurs, à l'issue de la mise en oeuvre du procédé selon l'invention, le milieu alimentaire traité présente avantageusement une meilleure filtrabilité, c'est-à-dire qu'il est moins colmatant et plus facilement filtrable, facilitant ainsi d'éventuelles étapes de post-traitement.

Lorsque le milieu liquide alimentaire est un vin, le procédé selon l'invention permet avantageusement d'en améliorer les propriétés organoleptiques. Lorsqu'il s'agit en particulier d'un vin rouge, il permet en outre d'en stabiliser les matières colorantes, les composés polyphénoliques instables ayant été éliminés par filtration après floculation avec l'agent de collage.

Selon des modes de mise en oeuvre particuliers, l'invention répond en outre aux caractéristiques suivantes, mises en oeuvre séparément ou en chacune de leurs combinaisons techniquement opérantes.

La patatine contenue dans l'agent de collage selon l'invention peut être la protéine produite naturellement par la plante *Solanum tuberosum*, ou une protéine produite par synthèse chimique ou par voie recombinante.

Préférentiellement, il s'agit de la protéine native, c'est-à-dire n'ayant subi aucune modification ou inactivation physique, chimique ou biochimique significative, en particulier aucune dénaturation.

L'agent de collage peut la contenir sensiblement pure, ou en mélange avec d'autres composants. L'agent de collage contient alors de préférence au moins 10 %, de préférence au moins 20 %, et préférentiellement au moins 30 %, en poids, de patatine de pomme de terre, par rapport au poids total de ses composants.

Dans des modes de mise en oeuvre particuliers de l'invention, l'agent de collage est un extrait protéique de pomme de terre contenant de la patatine, dans une quantité de préférence d'au moins 10 % en poids, de préférence d'au moins 20 % en poids, et préférentiellement d'au moins 30 % en poids.

Un tel extrait protéique peut être obtenu par toute méthode connue en elle-même de l'homme du métier, notamment par extraction de protéines à partir de jus de pomme de terre, en particulier par chromatographie séparative.

Des exemples de telles méthodes sont notamment décrits dans le document WO 2008/069650, ou encore dans le document WO 2008/092450.

Schématiquement, le jus de pomme peut être produit, selon les méthodes classiques, par lavage et râpage des pommes de terre. Il s'agit d'un mélange complexe de matières solubles et insolubles, comprenant des protéines, de l'amidon, des minéraux, des glycoalcaloïdes toxiques et des phénols réactifs monomères et polymères.

Pour l'obtention de l'extrait protéique contenant la patatine, le jus de pomme de terre peut par exemple être séparé des matières solides, notamment des fibres et autres particules indésirables, par des techniques de séparation mécanique telles que la décantation ou par tamis centrifuge. Les protéines de pomme de terre peuvent être isolées du jus ainsi clarifié par chromatographie sur résine, en utilisant par exemple de l'acide citrique et de l'acide formique pour l'élution des fractions de haut poids moléculaire et de bas poids moléculaire. Ces fractions peuvent ensuite être concentrées par ultrafiltration, et conditionnées par traitement à température douce (20 à 25 °C) et addition de régulateurs de pH, tels que l'acide chlorhydrique et l'hydroxyde de sodium. Les triglycoalcaloïdes peuvent en être éliminés, par exemple par traitement par du charbon activé. L'extrait protéique final peut alors être séché.

Un extrait protéique de pomme de terre particulièrement adapté à la mise en oeuvre du procédé selon l'invention est l'extrait commercialisé sous la marque Vegecoll® par la société Laffort. Cet extrait sec se présente sous forme d'une poudre fine de couleur blanche ou sous forme liquide.

Un tel extrait protéique présente avantageusement un potentiel zêta élevé, compris entre 15,5 mV ± 0,2, et 17,9 mV ± 1,5, selon les protocoles de mesures. Ce potentiel zêta, corrélé à la vitesse de sédimentation, confère notamment à l'extrait une bonne performance sur le tassement des particules collées (N. Iturmendi et al., 2013, Revue des oenologues N°149, 25-28).

Dans des modes de mise en oeuvre particuliers de l'invention, l'agent de collage est introduit dans le milieu liquide alimentaire sous forme d'une solution aqueuse concentrée à 1 à 10 % en poids, par exemple à environ 5 % en poids, de l'agent de collage, par rapport au poids total de la solution. On englobe ici, dans le terme solution, aussi bien les compositions sous forme liquide, que les compositions sous forme de gel.

Dans des modes de mise en oeuvre particuliers de l'invention, permettant d'atteindre des performances de clarification, amélioration de la filtrabilité et stabilisation particulièrement élevées, l'agent de collage est introduit dans le milieu liquide alimentaire à une concentration comprise entre 0,5 et 50 grammes, notamment entre 0,5 et 20 grammes.

L'agent de collage peut en particulier être introduit dans le milieu liquide alimentaire à une concentration comprise entre 0,5 et 5 grammes, et plus particulièrement entre 2 et 5 grammes, d'agent de collage par hectolitre de milieu liquide alimentaire. De telles fourchettes de concentration s'avèrent notamment particulièrement adaptées à la clarification, l'amélioration de la filtrabilité et la stabilisation des vins rouges.

La concentration de l'agent de collage dans le rétentat circulant dans la boucle de recirculation varie, au cours de la mise en oeuvre du procédé, entre 0,005 et 25 g/l.

Elle peut en particulier être maintenue à une valeur comprise entre 15 et 25 g/l.

Des conditions particulièrement préférées d'opération du dispositif de filtration sont par exemple une température d'environ 20 °C, une vitesse tangentielle d'environ 2 m/s et/ou une pression de filtration inférieure à 700 mbar.

La membrane de filtration tangentielle mise en oeuvre peut par exemple être une membrane en polyéthersulfone hydrophile, de structure asymétrique avec un diamètre de pores d'environ 0,2 µm (+/- 0,15 µm). Une telle membrane permet notamment d'obtenir un perméat très limpide, et pauvre en germes. Elle limite en outre les colmatages en profondeur et la rétention de polyphénols.

Le milieu liquide alimentaire pour le traitement duquel le procédé selon l'invention est mis en oeuvre peut notamment être un jus de fruits ou une boisson obtenue par fermentation alcoolique, telle que la bière ou le cidre, ou encore un moût de raisin. En particulier, il peut s'agir d'un vin, notamment d'un vin rouge, ou encore d'un vin blanc ou mi-blanc.

Selon un deuxième aspect, la présente invention concerne l'utilisation de patatine de pomme de terre pour la clarification, l'amélioration de la filtrabilité et la stabilisation d'un milieu liquide alimentaire, notamment d'un vin, et en particulier d'un vin rouge. Selon cette utilisation, la patatine est introduite dans le milieu liquide alimentaire, de préférence en circulation, dans un dispositif de filtration tangentielle, en amont d'une membrane de filtration tangentielle que comporte ce dispositif.

A cet effet, la patatine peut notamment être contenue dans un extrait protéique de pomme de terre, par exemple dans l'extrait Vegecoll®.

Cet extrait protéique de pomme de terre contient de préférence au moins 10 %, de préférence encore au moins 20 %, et préférentiellement au moins 30 %, en poids, de patatine de pomme de terre.

De manière plus générale, la présente invention concerne un procédé de clarification, d'amélioration de la filtrabilité et de stabilisation d'un milieu liquide alimentaire, tel qu'un vin, par une technique dite de collage en ligne, c'est-à-dire par combinaison de la mise en oeuvre d'un agent de collage contenant de la patatine et d'une technique séparative telle que la filtration tangentielle, comme détaillé ci-avant, mais également telle que la centrifugation ou la flottation. Selon un tel procédé, l'agent de collage contenant de la patatine, répondant à l'une ou plusieurs des caractéristiques ci-avant, est ajouté, de préférence en continu et en conditions dynamiques, dans le milieu liquide alimentaire en amont de moyens d'élimination des matières solides par filtration tangentielle, centrifugation ou flottation. Cette introduction est notamment réalisée dans le milieu liquide entraîné en circulation en direction de ces moyens d'élimination.

Un tel procédé permet avantageusement, simultanément, de clarifier, d'améliorer la filtrabilité et de stabiliser les milieux liquides alimentaires, notamment, mais non limitativement, les vins, en particulier les vins rouges.

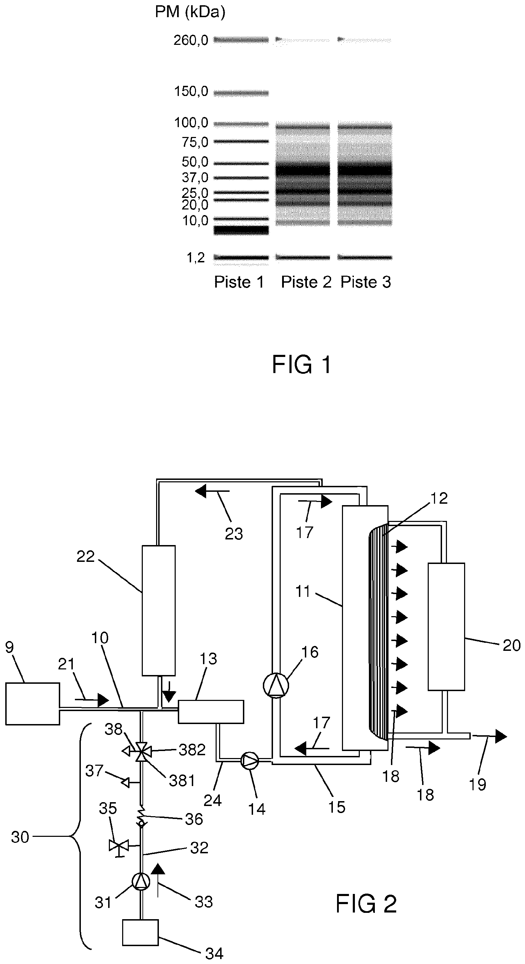

Les caractéristiques et avantages du procédé selon l'invention apparaîtront plus clairement à la lumière des exemples décrits ci-après, fournis à simple titre illustratif et nullement limitatifs de l'invention, avec l'appui des figures 1 à 6, dans lesquelles :
- la figure 1 montre un gel d'électrophorèse SDS-PAGE obtenu pour, Piste 1 : un marqueur de poids moléculaire (PM, kDa) ; Piste 2 et Piste 3 : l'extrait protéique de pomme de terre Vegecoll® ;
- la figure 2 représente de manière schématique un dispositif de filtration tangentielle pour la mise en oeuvre d'un procédé de clarification, d'amélioration de la filtrabilité et de stabilisation d'un milieu liquide alimentaire conforme à l'invention ;

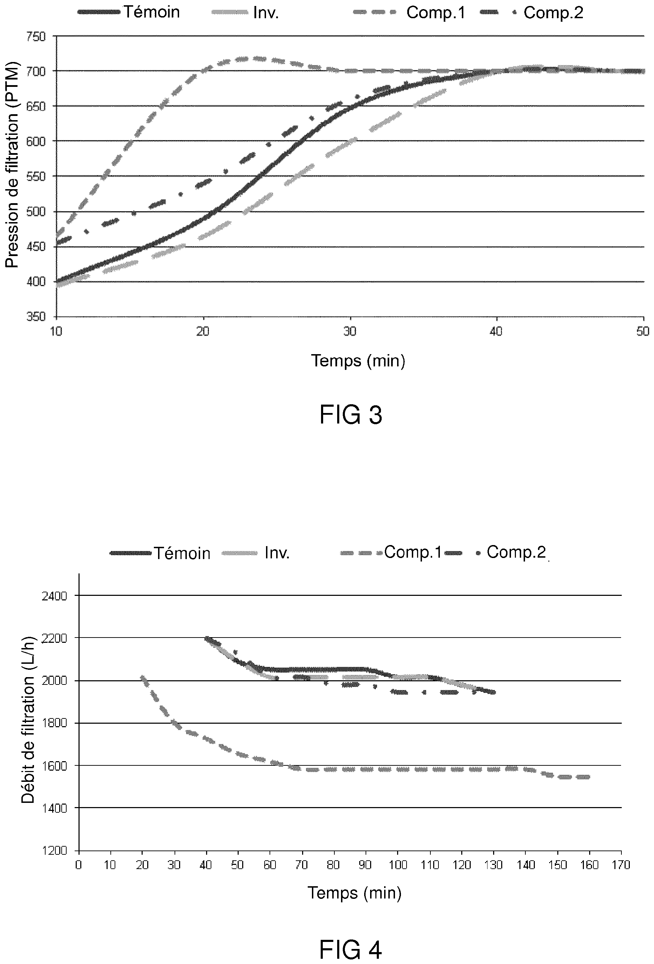

- la figure 3 représente un graphe montrant l'évolution de la pression de filtration, à débit de filtration constant, en fonction du temps, lors de la mise en oeuvre d'un procédé de traitement d'un vin par collage en ligne et filtration tangentielle, pour respectivement un agent de collage conforme à l'invention (Inv.), des agents de collage protéiques proposés par l'art antérieur pour le collage statique (Comp.1 et Comp.2), et un témoin sans agent de collage ;

- la figure 4 représente un graphe montrant l'évolution du débit de filtration, à pression de filtration constante, en fonction du temps, lors de la mise en oeuvre d'un procédé de traitement d'un vin par collage en ligne et filtration tangentielle, pour respectivement un agent de collage conforme à l'invention (Inv.), des agents de collage protéiques proposés par l'art antérieur pour le collage statique (Comp.1 et Comp.2), et un témoin sans agent de collage ;

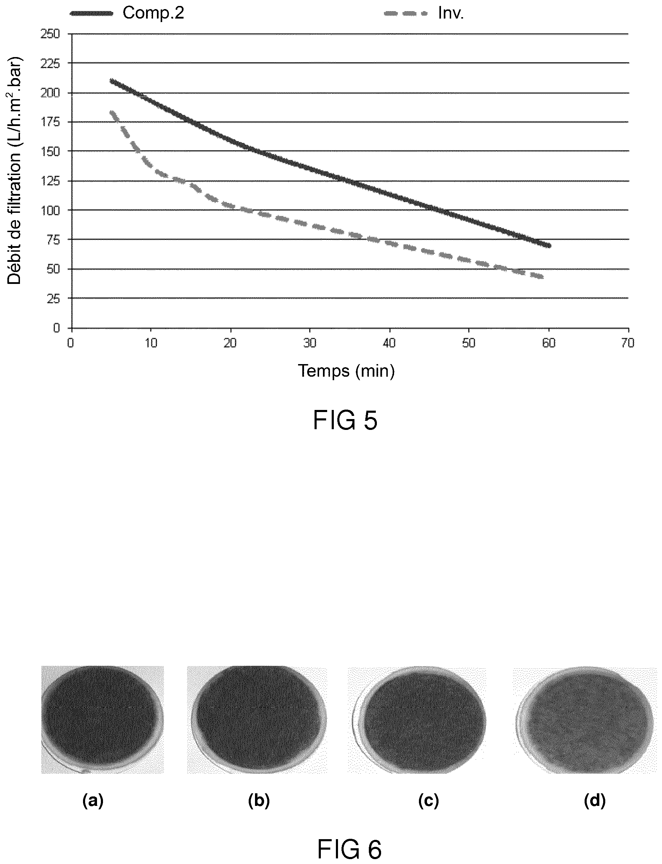

- la figure 5 représente un graphe montrant l'évolution du débit de filtration en fonction du temps, lors de la filtration tangentielle de solutions aqueuses à pH 3 additionnées respectivement d'un agent de collage conforme à l'invention (Inv.) et d'un agent de collage protéique proposé par l'art antérieur pour le collage statique (Comp.2) ;
- et la figure 6 montre des photographies de membranes obtenues à l'issue d'un test de cristallisation pour la détermination de la stabilité tartrique après traitement d'un vin par collage en ligne et filtration tangentielle, par respectivement des agents de collage protéiques proposés par l'art antérieur pour le collage statique : Comp.1 (b) et Comp.2 (c), un agent de collage conforme à l'invention (d) et un témoin sans agent de collage (a).

### A/ Agents de collage

Un exemple d'agent de collage conforme à l'invention est un extrait protéique de pomme de terre riche en patatine, commercialisé sous le nom Vegecoll® par la société Laffort. Cet extrait est préparé conformément à l'enseignement du document WO 2008/069650.

Cet extrait a été caractérisé par électrophorèse SDS-PAGE, selon le protocole ci-après, au moyen d'un système Experion® (BioRad), qui permet de déterminer et de quantifier les poids moléculaires des protéines de façon automatique. Cet appareil utilise la technologie de séparation par microfluide pour réaliser toutes les étapes de l'électrophorèse sur gel (préparation de l'échantillon, coloration et décoloration, analyse d'image et des données).

A cet effet, les protéines ont été diluées dans l'eau à différentes concentrations, puis les préparations ont été centrifugées à 10000 g pendant 5 min. Les échantillons ont été pipetés directement sur le kit d'analyse. Le logiciel a fourni l'électrophérogramme, avec la détermination de la détection de pics et les poids moléculaires.

Le gel obtenu est montré sur la figure 1. Il a été déduit, de l'intensité de chaque bande apparaissant sur les pistes 2 et 3 de ce gel, correspondant à l'extrait Vegecoll®, la répartition protéique dans cet extrait indiquée dans le Tableau 1 ci-après.

**Tableau 1 - Poids moléculaire et % de répartition de chacune des bandes obtenues sur un gel d'électrophorèse SDS-PAGE pour l'extrait protéique Vegecoll®**

| Bande | Poids moléculaire (kDa) | % de répartition |
|---|---|---|
| 1 | 1,2 | - |
| 2 | 3,27 | - |
| 3 | 4,56 | - |
| 4 | 9,13 | 5,89 |
| 5 | 12 | 2,66 |
| 6 | 18,15 | 14,52 |
| 7 | 26,01 | 17,56 |
| 8 | 32,47 | 6,48 |
| 9 | 38,01 | 4,48 |
| 10 | 40,93 | 37,74 |
| 11 | 65,2 | 1,61 |
| 12 | 71,21 | 1,55 |
| 13 | 79,17 | 0,7 |
| 14 | 88,17 | 1,77 |
| 15 | 94,92 | 5,04 |
| 16 | 260 | |

L'extrait protéique Vegecoll® présente une distribution de poids moléculaire de 10 à 100 kDa. La protéine la plus abondante, au poids moléculaire de 40,93 kDa, est la patatine.

La détermination de la taille des particules et du potentiel zêta de cet extrait protéique a été effectuée par un appareil ZetaSizer Nano (Malvern), selon le protocole décrit dans la publication d'Iturmendi et al., 2013, citée ci-avant. Pour les mesures, l'extrait Vegecoll® a été mélangé à une solution modèle de vin (AT 4 g/l, 12 % éthanol, pH 3,6). A titre comparatif, les mêmes paramètres ont également été mesurés pour d'autres agents de collage protéiques : la gélatine (Gecoll® Supra, Laffort), l'ovalbumine (Albucoll, Laffort) et un extrait protéique de pois (Greenfine® Must, Lamothe-Abiet).

Les résultats obtenus sont montrés sur le tableau 2 ci-dessous.

**Tableau 2 - Mesures du potentiel zêta et de la taille de particules pour différents agents de collage protéiques dans une solution modèle de vin**

| Agent de collage | Potentiel zêta (mV) | Taille des particules (nm) |
|---|---|---|
| Vegecoll® | 17,9 ± 1,5 | 250 - 715 |
| Gélatine | 11,2 ± 0,4 | 3 - 10 |
| Ovalbumine | 11,6 ± 0,3 | 51 - 220 |
| Extrait de pois | -1,7 ± 0,2 | 250 - 830 |

On observe que l'extrait protéique Vegecoll® conforme à l'invention présente un potentiel zêta relativement élevé, et une taille des particules importante.

Le potentiel zêta a été mesuré à différents autres pH de la solution modèle de vin. Pour l'extrait Vegecoll®, il varie entre 14 mV à pH 3,8, et 20 mV à pH 3,4.

### B/ Dispositif pour la mise en oeuvre d'un procédé selon l'invention

Un exemple de dispositif de filtration tangentielle pour la mise en oeuvre d'un procédé conforme à l'invention est montré sur la figure 2.

Les constituants de ce dispositif étant classiques en eux-mêmes, et bien connus de l'homme du métier, ils seront décrits ci-après de manière schématique. Il convient de noter que les proportions relatives de ces différents constituants apparaissant sur la figure 2 ont été choisies dans un souci de clarté de la figure, et ne sont pas représentatives de la réalité.

Le dispositif de filtration tangentielle comporte un premier conduit d'alimentation 10, dans lequel le milieu liquide à traiter est amené, par une pompe (non représentée sur la figure), depuis une cuve d'alimentation 9, également nommée cuve ou cuvon de travail, du dispositif, vers un module de filtration 11, selon la direction indiquée en 21 sur la figure 2.

Le module de filtration 11 est représenté sur la figure 2 en coupe partielle, de sorte à faire apparaitre les membranes de filtration 12 qui le composent, qui sont classiques en elles-mêmes. Ces membranes sont par exemple tubulaires ou spiralées.

Les membranes 12 peuvent notamment consister en des fibres creuses, microporeuses de diamètre des pores compris entre 50 nm et 1 µm. En particulier, les membranes 12 peuvent être des membranes organiques en polyéthersulfone (PES), hydrophile, de structure asymétrique avec un diamètre de pores nominal de 0,2 µm. De telles membranes sont particulièrement adaptées à la filtration des vins.

Depuis le conduit d'alimentation 10, le milieu liquide à traiter est amené dans un préfiltre 13, puis, aspiré par une pompe 14, dans un deuxième conduit d'alimentation 24, jusqu'à une boucle de recirculation 15. De manière classique en elle-même, le milieu liquide est entrainé en circulation, par une pompe 16, selon la direction indiquée en 17 sur la figure 2, dans cette boucle de recirculation 15, qui l'amène en contact tangentiel avec les membranes 12 du module de filtration 11. Une partie du liquide, nommée perméat, traverse les membranes 12 sous l'effet d'un gradient de pression, comme indiqué en 18 sur la figure 2. Ce perméat, qui est le milieu liquide traité, est récupéré en sortie du dispositif de filtration, comme indiqué en 19 sur la figure 2.

En sortie du module de filtration 11, le dispositif peut comporter en outre un système de rétrofiltration 20, classique en lui-même, pour la régénération des membranes de filtration 12, un tel mode de réalisation n'étant nullement limitatif de l'invention.

Les particules solides retenues par le module de filtration 11 se concentrent quant à elles dans le liquide qui n'a pas traversé la membrane, nommé rétentat. Une contrainte de cisaillement, créée par la circulation tangentielle du fluide, s'oppose avantageusement au dépôt des particules en surface des membranes 12.

De manière générale, la microfiltration tangentielle permet de filtrer en une seule opération, et avec un seuil de coupure très bas, des liquides relativement chargés. Cette technique a également pour avantage le maintien d'un niveau de qualité de filtration régulier, tout au long de l'opération de filtration.

Le dispositif de filtration comporte en outre un module 30 de dosage en ligne d'agent de collage. Ce module 30 comporte une pompe 31, qui entraîne l'agent de collage en circulation dans une canalisation 32, dans la direction indiquée en 33 sur la figure 2, depuis un réservoir de stockage 34.

Dans le mode de réalisation particulier représenté sur la figure 2, la canalisation 32 est en communication hydraulique avec le premier conduit d'alimentation 10 en milieu liquide à traiter, si bien que l'agent de collage se mélange avec le milieu liquide à traiter dans le premier conduit d'alimentation 10. Un tel mode de réalisation n'est cependant nullement limitatif de l'invention, et le dispositif peut être configuré de sorte à réaliser ce mélange au niveau d'autres constituants du dispositif, toujours cependant en amont du module de filtration 11 dans le sens de circulation du milieu liquide, de sorte à s'assurer que le milieu liquide situé dans le dispositif de filtration soit toujours mélangé à l'agent de collage avant sa première mise en contact avec le module de filtration 11.

Préférentiellement, lorsque le dispositif de filtration comporte un préfiltre 13, permettant d'éliminer les impuretés solides de taille importante avant la mise en contact avec le module de filtration tangentielle 11, le dispositif est configuré pour que le mélange du milieu liquide à traiter avec l'agent de collage soit effectué en amont du préfiltre 13, dans la direction 21 de circulation du milieu liquide à traiter dans le premier conduit d'alimentation 10.

La pompe 31 est classique en elle-même. Il peut notamment s'agir d'une pompe à membrane (PCM Lagoa®), de capacité comprise entre 20 et 120 l/h.

Sur la canalisation 32, peuvent par exemple être en outre montés les éléments suivants, successivement dans le sens 33 de circulation de l'agent de collage dans la canalisation 32 :
- une vanne d'ouverture / fermeture 35,
- un clapet anti-retour 36, qui assure une contre-pression indispensable au bon déroulement de l'opération,
- un détecteur de flux 37, qui permet de contrôler que l'agent de collage circule bien dans la canalisation 32,
- une vanne trois voies 38.

La vanne trois voies 38 a une double fonction :
- en position 381, elle permet l'injection de l'agent de collage dans le conduit d'alimentation 10,
- en position 382, elle permet d'effectuer des opérations de lavage et de rinçage de la canalisation 32. La position 382 peut aussi signifier que la vanne 38 est à l'état repos.

Le dispositif de filtration peut également être équipé d'un réservoir de travail 22, dans lequel peut être amenée, selon la direction indiquée en 23 sur la figure 2, une partie du rétentat circulant dans la boucle de recirculation 15, pour le stockage temporaire d'un volume de rétentat en recirculation dans la boucle de recirculation 15.

Pour la mise en oeuvre du procédé selon l'invention, pour la clarification, l'amélioration de la filtrabilité et la stabilisation d'un milieu liquide alimentaire, notamment d'un vin, l'agent de collage, pouvant se présenter sous forme d'une solution aqueuse, est incorporé en continu, depuis la canalisation 32, dans le milieu liquide circulant dans le conduit d'alimentation 10, de préférence à une dose comprise entre 2 et 5 g/hl. L'agent de collage et le milieu liquide sont en contact l'un avec l'autre dans le deuxième conduit d'alimentation 24 et dans la boucle de recirculation 15.

Le module de filtration 11 est de préférence paramétré pour ne pas dépasser un débit de perméation de 42 L/m².h. Le paramétrage du débit de filtration peut influer sur l'efficacité du traitement, plus le débit est important et plus de temps de contact est court.

Le milieu liquide filtré et traité est finalement recueilli du coté perméat, en sortie du dispositif comme indiqué en 19 sur la figure 2.

La concentration d'agent de collage dans le rétentat est de préférence maintenue entre 15 et 25 g/L. Ce niveau de concentration d'agent de collage dans le rétentat permet avantageusement d'obtenir des taux de perte inférieurs à 3 %.

### C/ Expérience

L'objectif de cette expérience est d'évaluer le pouvoir colmatant des agents de collage et des flocs qu'ils génèrent, et d'apprécier l'efficacité oenologique de procédés visant à la clarification, l'amélioration de la filtrabilité et la stabilisation d'un vin, mettant en oeuvre la combinaison du collage en ligne, en conditions dynamiques, et de la filtration tangentielle. Le dispositif mis en oeuvre est tel que décrit ci-avant.

### C.1/ Matériel et méthodes

### C.1.1/ Test de stabilité tartrique

La stabilité tartrique est évaluée par la mesure du degré d'instabilité tartrique (DIT), selon le protocole décrit dans le document FR 2 709 308, soit par observation visuelle de la présence de cristaux de tartre après un passage à -4 °C pendant 6 jours.

### C.1.2/ Test de stabilité de la matière colorante

La stabilité de la matière colorante est évaluée par mesure du trouble d'un échantillon par néphélométrie, au moyen d'un turbidimètre qui analyse la lumière diffusée sous un angle de 90 degrés par rapport au faisceau incident. Plus précisément, la mesure est déterminée par un néphélomètre HACH (de 0 à 1000 NTU) et exprimée en NTU (Nephlometric Turbidity Units).

A cet effet, l'échantillon est exposé au froid (4 °C) durant 2 jours ; on mesure ensuite le trouble et on détermine que la matière colorante est :
- stable si : Turbidité < 10 NTU
- moyennement stable si : 10 NTU < Turbidité < 50 NTU
- très instable si : Turbidité > 50 NTU

### C.1.3/ Agents de collage et protocoles de préparation

On utilise un agent de collage protéique conforme à l'invention (Inv.), et deux agents de collage protéiques comparatifs (Comp.1 et Comp.2). Ces agents de collage protéiques sont les suivants. Pour chacun, la pompe doseuse permettant l'injection est placée sur la ligne avant le module de filtration tangentielle ; elle est réglée en fonction de 3 paramètres : le débit, la concentration l'agent de collage et la dose d'emploi déterminée.
- Comp.1 : gélatine, protéine d'origine animale (Gecoll® Supra, Laffort). Cette colle liquide homogène est diluée à 10 % massique (1 kg de solution active dans 10 kg de solution à traiter). La dose d'emploi déterminée est de 3 cl/hl.
- Comp. 2 : colle de pois (Greenfine® Must, Lamothe-Abiet). Cette colle en poudre est diluée à 5 % (1 kg de poudre active dans 20 kg de solution à traiter). La dose d'emploi déterminée est de 10 g/hl.
- Inv. : colle organique de type végétale, extrait de protéines de pomme de terre (Vegecoll®, Laffort). Cette colle liquide homogène est diluée à 5 % (1 kg de solution active dans 20 kg de solution à traiter). La dose d'emploi déterminée est de 2 g/hl.

### C.1.4/ Caractéristiques du module de filtration tangentielle

Le module de filtration tangentielle mis en oeuvre est le filtre Flavy FX3 (Bûcher Vaslin), de caractéristiques techniques :
- membranes fibres creuses : 3 modules LE monocorps
- surface du filtre : 36 m²
- matériaux membranaires : polyéthersulfone
- diamètre des membranes fibres creuses : 1,5 mm.

### C.1.5/ Paramètres de réglage du dispositif de filtration

Les paramètres sont réglés comme suit :
- débit maxi.module⁻¹ : 5 hl.h⁻¹
- débit mini.module⁻¹ : 2 hl.h⁻¹
- pression de filtration (max) : 700 mbar
- Delta P (max) : 1300 mbar

### C.1.6/ Mode opératoire

Les performances de filtration sont évaluées, au cours et à l'issue de la filtration tangentielle, pour un vin rouge séparé en 4 lots de 50 hl, dont :
- 1^{er} lot : témoin non collé ;
- 2^{ème} lot : collage en ligne avec l'agent de collage comparatif Comp.1 à une concentration de 3 cl/hl ;
- 3^{ème} lot : collage en ligne avec l'agent de collage selon l'invention Inv. à une concentration de 2 g/hl ;
- 4^{ème} lot : collage en ligne avec l'agent de collage comparatif Comp.2 à une concentration de 10 g/hl ;

### C.1.7/ Caractéristiques du vin

Vin rouge Carignan/Syrah 2014
Turbidité : 250 NTU CFLA : 6774

### C.2/ Résultats

### C.2.1/ Cinétique de filtration des flocs

Les résultats obtenus pour chaque lot, en termes de variation dans le temps de la pression de filtration à débit de filtration constant, sont montrés sur la figure 3.

Ces essais comparatifs montrent un colmatage rapide avec l'ajout de gélatine (Comp.1). Le floc produit par cette protéine est plus colmatant. Dans les premières minutes du cycle, à débit de filtration constant, on note une augmentation plus rapide de la pression de filtration pour la modalité Comp.1. Pour les deux autres agents de collage, Inv. et Comp.2, on ne constate pas de différence significative avec le témoin.

Ce constat est conforté dans la suite de la filtration : une fois la pression maximum de filtration atteinte, comme montré sur la figure 4, qui illustre pour chaque lot la variation dans le temps du débit de filtration à pression de filtration constante, on observe une chute relativement importante du flux de filtration pour la modalité gélatine (Comp.1). Pour les autres modalités, Inv. et Comp.2, les différences ne sont pas significatives.

Ceci démontre que les agents de collage Inv. et Comp.2 ne modifient pas le pouvoir colmatant du vin.

### C.2.2/ Cinétique de colmatage par les agents de collage seuls

La membrane de filtration mise en oeuvre pour cette expérience est une membrane X-Flow. La vitesse tangentielle est de 2 m/s, la pression de filtration est de 1 bar, et la température de 20 °C.

Chaque agent de collage Inv. et Comp.2 est dilué dans la solution aqueuse acidifiée respective suivante, à la concentration suivante :
- Inv. : pH 3, concentration en agent de collage de 2 g/L
- Comp.2 : pH 3, concentration en agent de collage de 10 g/L.

Les résultats sont montrés sur la figure 5. On y observe que le pouvoir colmatant des protéines de pois (Comp.2) et de pomme de terre (Inv.) en milieu aqueux acidifié, sur le même type de membranes, est progressif et très rapide. L'agent de collage conforme à l'invention, bien qu'en solution cinq fois moins concentrée, est plus colmatant que l'agent de collage Comp.2. Le colmatage qu'il génère est en outre plus difficile à éliminer. Lors de cette expérience, il a fallu procéder à trois régénérations successives pour l'agent de collage Inv., contre une seule pour l'agent de collage Comp.2, pour obtenir une membrane propre et régénérée.

Le résultat obtenu sur vins au moyen de l'agent de collage conforme à l'invention Inv. (Vegecoll®) est donc d'autant plus inattendu, car inverse de ceux obtenus sur de l'eau.

### C.2.3/ Effet de stabilisation des vins

Des échantillons des perméats sont prélevés en sortie du module de filtration tangentielle, pour chaque lot, et analysés pour leurs propriétés. Plus particulièrement, les niveaux de stabilisation tartrique et des matières colorantes sont évalués. Les résultats obtenus sont indiqués dans le tableau 3 ci-après.

**Tableau 3 - Stabilité colorante et tartrique des vins traités**

| | Témoin | Comp.1 | Comp.2 | Inv. |
|---|---|---|---|---|
| Turbidité du perméat (NTU) | 0,1 | 1,1 | 0,2 | 0,5 |
| Stabilité matière colorante après 48 h à -4°C | Très instable | Instable | Instable | Stable |
| Turbidité 1 (initiale) (NTU) | 0,1 | 1,1 | 0,2 | 0,5 |
| Turbidité 2 (finale) (NTU) | 58,8 | 21,9 | 15,7 | 9,1 |
| Différence de turbidité (NTU) | 58,7 | 20,8 | 15,5 | 8,6 |
| Test de cristallisation après 6 jours à -4°C | | | | |
| Présence de cristaux de matière colorante | Positif ++ | Positif ++ | Positif ++ | Positif |
| Présence de cristaux de tartre | Positif | Négatif | Négatif | Négatif |

Les résultats du test de cristallisation, par maintien d'échantillons de vins traité pendant 6 jours à -4 °C, sont montrés sur la figure 6, pour le témoin (a), la colle Comp.1 (b), la colle Comp.2 (c) et la colle Inv. (d).

Ces résultats démontrent que le traitement améliore la stabilité colorante des vins, le meilleur résultat étant obtenu avec la colle Inv., pour laquelle il est obtenu, par rapport aux autres colles et au témoin, une quantité bien moins importante de précipités de matière colorante.

Les vins traités sont stables tartriquement, pour chacune des modalités.

Des essais complémentaires ont montré une efficacité très faible de l'agent de collage de pois (Comp.2) même à forte dose (20 g/L), sur la stabilisation de la matière colorante.

L'agent de collage Inv. conforme à la présente invention est toujours plus efficace, même utilisé à la dose de 2 g/hl. Ces résultats sont en outre constants, contrairement à ceux obtenus avec l'agent de collage comparatif Comp.2.

Les essais décrits ci-avant mettent en évidence les avantages obtenus par la mise en oeuvre d'un collage protéique en ligne combinant, conformément à la présente invention, un agent de collage particulier, contenant de la patatine de pomme de terre, et la technique de filtration tangentielle. Contrairement à ce que l'on pouvait attendre, les flocs crées par l'agent de collage protéique végétal conforme à l'invention ne sont pas colmatants, et ne posent pas de problème de régénération des membranes.

En plus d'une stabilisation de leur couleur, on note en outre qu'ils permettent une amélioration nette de la filtrabilité des vins traités, ainsi qu'une amélioration qualitative de ces vins : ces vins sont jugés moins astringents et moins végétaux à l'issue de la mise en oeuvre du procédé selon l'invention.

## Revendications

1. Procédé de clarification, d'amélioration de la filtrabilité et de stabilisation d'un milieu liquide alimentaire, comprenant :
- l'entraînement dudit milieu liquide alimentaire en circulation dans un dispositif de filtration tangentielle comportant un conduit d'alimentation en milieu liquide (10), une membrane de filtration tangentielle (12) et une boucle de recirculation de rétentat (15),
- la filtration tangentielle dudit milieu liquide alimentaire, de manière à obtenir un rétentat de filtration et un perméat de filtration,
**caractérisé en ce qu'**il comprend l'introduction, dans ledit milieu liquide alimentaire situé dans ledit dispositif de filtration tangentielle, avant la filtration dudit milieu liquide alimentaire, d'un agent de collage contenant de la patatine de pomme de terre.

2. Procédé selon la revendication 1, selon lequel l'introduction de l'agent de collage contenant de la patatine de pomme de terre est réalisée dans le milieu liquide alimentaire en circulation dans ledit dispositif de filtration tangentielle, en amont de ladite membrane de filtration tangentielle (12).

3. Procédé selon l'une quelconque des revendications 1 à 2, selon lequel l'agent de collage contient au moins 10% en poids de patatine de pomme de terre.

4. Procédé selon l'une quelconque des revendications 1 à 3, selon lequel l'agent de collage contient au moins 30 % en poids de patatine de pomme de terre.

5. Procédé selon l'une quelconque des revendications 1 à 4, selon lequel l'agent de collage est un extrait protéique de pomme de terre.

6. Procédé selon l'une quelconque des revendications 1 à 5, selon lequel l'agent de collage est introduit dans le milieu liquide alimentaire à une concentration comprise entre 0,5 et 50 grammes d'agent de collage par hectolitre de milieu liquide alimentaire.

7. Procédé selon l'une quelconque des revendications 1 à 6, selon lequel la concentration de l'agent de collage dans le rétentat circulant dans la boucle de recirculation (15) varie entre 0,005 et 25 g/l.

8. Procédé selon l'une quelconque des revendications 1 à 7, selon lequel l'agent de collage est introduit dans le milieu liquide alimentaire sous forme d'une solution aqueuse concentrée à 1 à 10 % en poids, par rapport au poids total de la solution.

9. Procédé selon l'une quelconque des revendications 1 à 8, selon lequel le milieu liquide alimentaire est un vin.

10. Utilisation de patatine de pomme de terre pour la clarification, l'amélioration de la filtrabilité et la stabilisation d'un milieu liquide alimentaire, **caractérisée en ce que** la patatine est introduite dans ledit milieu liquide alimentaire dans un dispositif de filtration tangentielle, en amont d'une membrane de filtration tangentielle (12) que comporte ledit dispositif.

11. Utilisation selon la revendication 10, selon laquelle la patatine est contenue dans un extrait protéique de pomme de terre.

12. Utilisation selon la revendication 11, selon laquelle l'extrait protéique de pomme de terre contient au moins 10 % en poids de patatine de pomme de terre.

13. Utilisation selon la revendication 12, selon laquelle l'extrait protéique de pomme de terre contient au moins 30 % en poids de patatine de pomme de terre.

## Patentansprüche

1. Verfahren zum Klären, zum Verbessern der Filtrierbarkeit und zum Stabilisieren eines flüssigen Nahrungsmediums, umfassend:
- Zirkulieren des flüssigen Nahrungsmediums in einer Tangentialfiltrationsvorrichtung, die eine Flüssigmedium-Zuführleitung (10), eine Tangentialfiltrationsmembran (12) und eine Retentat-Rezirkulationsschleife (15) umfasst,
- Tangentialfiltrieren des flüssigen Nahrungsmediums, um ein Filtrationsretentat und ein Filtrationspermeat zu erhalten,
**dadurch gekennzeichnet, dass** es vor dem Filtrieren des flüssigen Nahrungsmediums das Einbringen eines Kartoffelpatatin enthaltenden Schönungsmittels in das in der Tangentialfiltrationsvorrichtung befindliche flüssige Nahrungsmedium umfasst.

2. Verfahren nach Anspruch 1, wobei das Einbringen des Kartoffelpatatin enthaltenden Schönungsmittels in das flüssige Nahrungsmittel, das sich in der Tangentialfiltrationsvorrichtung in Zirkulation befindet, stromaufwärts der Tangentialfiltrationsmembran (12) ausgeführt wird.

3. Verfahren nach einem der Ansprüche 1 bis 2, wobei das Schönungsmittel mindestens 10 Gewichts-% Kartoffelpatatin enthält.

4. Verfahren nach einem der Ansprüche 1 bis 3, wobei das Schönungsmittel mindestens 30 Gewichts-% Kartoffelpatatin enthält.

5. Verfahren nach einem der Ansprüche 1 bis 4, wobei das Schönungsmittel ein Kartoffelproteinextrakt ist.

6. Verfahren nach einem der Ansprüche 1 bis 5, wobei das Schönungsmittel in einer Konzentration im Bereich zwischen 0,5 und 50 Gramm Schönungsmittel pro Hektoliter flüssigen Nahrungsmediums in das flüssige Nahrungsmedium eingebracht wird.

7. Verfahren nach einem der Ansprüche 1 bis 6, wobei die Konzentration des Schönungsmittels im Retentat, das in der Rezirkulationsschleife (15) zirkuliert, zwischen 0,005 und 25 g/l variiert.

8. Verfahren nach einem der Ansprüche 1 bis 7, wobei das Schönungsmittel in Form einer wässrigen Lösung, die in Bezug auf das Gesamtgewicht der Lösung auf 1 bis 10 Gewichts-% konzentriert ist, in das flüssige Nahrungsmedium eingebracht wird.

9. Verfahren nach einem der Ansprüche 1 bis 8, wobei das flüssige Nahrungsmedium ein Wein ist.

10. Verwendung von Kartoffelpatatin zum Klären, zum Verbessern der Filtrierbarkeit und zum Stabilisieren eines flüssigen Nahrungsmediums, **dadurch gekennzeichnet, dass** das Patatin in einer Tangentialfiltrationsvorrichtung stromaufwärts einer Tangentialfiltrationsmembran (12) in das flüssige Nahrungsmedium eingebracht wird, welche die Vorrichtung umfasst.

11. Verwendung nach Anspruch 10, wobei das Patatin in einem Kartoffelproteinextrakt enthalten ist.

12. Verwendung nach Anspruch 11, wobei der Kartoffelproteinextrakt mindestens 10 Gewichts-% Kartoffelpatatin enthält.

13. Verwendung nach Anspruch 12, wobei der Kartoffelproteinextrakt mindestens 30 Gewichts-% Kartoffelpatatin enthält.

## Claims

1. Method for clarifying, improving the filterability and for stabilising a liquid food medium, comprising:
- driving said liquid food medium in circulation in a tangential filtration device comprising a liquid medium supplying line (10), a tangential filtration membrane (12) and a retentate recirculation loop (15),
- tangentially filtering said liquid food medium, in such a way as to obtain a filtration retentate and a filtration permeate,
**characterised in that** it comprises the introducing, in said liquid food medium located in said tangential filtration device, before the filtering of said liquid food medium, a fining agent containing potato patatin.

2. Method according to claim 1, wherein the introducing of the fining agent containing potato patatin is carried out in the liquid food medium in circulation in said tangential filtration device, upstream of said tangential filtration membrane (12).

3. Method according to any of claims 1 to 2, wherein the fining agent contains at least 10% by weight of potato patatin.

4. Method according to any of claims 1 to 3, wherein the fining agent contains at least 30% by weight of potato patatin.

5. Method according to any of claims 1 to 4, wherein the fining agent is a potato protein extract.

6. Method according to any of claims 1 to 5, wherein the fining agent is introduced into the liquid food medium at a concentration between 0.5 and 50 grams of fining agent per hectolitre of liquid food medium.

7. Method according to any of claims 1 to 6, wherein the concentration of the fining agent in the retentate circulating in the recirculation loop (15) varies between 0.005 and 25 g/l.

8. Method according to any of claims 1 to 7, wherein the fining agent is introduced into the liquid food medium in the form of an aqueous solution having a concentration of 1 to 10% by weight of said fining agent, with respect to the total weight of the solution.

9. Method according to any of claims 1 to 8, wherein the liquid food medium is a wine.

10. Use of potato patatin for the clarifying, improving the filterability and for stabilising a liquid food medium, **characterised in that** the patatin is introduced into said liquid food medium in a tangential filtration device, upstream of a tangential filtration membrane (12) that said device comprises.

11. Use according to claim 10, wherein the patatin is contained in a potato protein extract.

12. Use according to claim 11, wherein the potato protein extract contains at least 10% by weight of potato patatin.

13. Use according to claim 12, wherein the potato protein extract contains at least 30% by weight of potato patatin.
